# EUROPÄISCHE PATENTSCHRIFT

(11) **EP 0 874 019 B1**
(45) Veröffentlichungstag und Bekanntmachung des Hinweises auf die Patenterteilung: **26.11.2003**
(21) Anmeldenummer: 98106819.0
(22) Anmeldetag: 15.04.1998
(51) Int. Cl.: C08J 9/06, C08J 9/14, C08J 9/12

(54) **Verfahren zur Herstellung von Polymethacrylimid-Schaumstoffen**
Process for producing polymethacrylimid foams
Procédé de préparation de mousses de polyméthacrylimide

(30) Priorität: 25.04.1997 DE 19717483
(43) Veröffentlichungstag der Anmeldung: 28.10.1998
(73) Patentinhaber: Röhm GmbH & Co. KG, 64293 Darmstadt (DE)
(72) Erfinder: Geyer, Werner, 64367 Mühltal (DE); Seibert, Hermann, 67663 Kaiserslautern (DE); Servaty, Sabine, Dr., 64331 Weiterstadt (DE)

(56) Entgegenhaltungen:
- US-A- 4 665 104
- US-A- 4 996 109

## Beschreibung

Die Erfindung betrifft Polymethacrylimid-Schaumstoffe mit deutlich verbesserten thermomechanischen Eigenschaften.

### Stand der Technik

Polymethacrylimide mit hoher Wärmeformbeständigkeit können durch Umsetzung von Polymethylmethacrylat oder dessen Copolymeren mit primären Aminen erhalten werden. Stellvertretend für die Vielzahl an Beispielen für diese polymeranaloge Imidierung seien genannt: US 4 246 374, EP 216 505 A2, EP 860 821. Hohe Wärmeformbeständigkeit läßt sich hierbei entweder durch Einsatz von Arylaminen (JP 05222119 A2) oder durch die Verwendung von speziellen Comonomeren erreichen (EP 561 230 A2, EP 577 002 A1). All diese Reaktionen ergeben jedoch keine Schäume, sondern feste Polymere, die zum Erhalt eines Schaumes in einem separaten zweiten Schritt aufgeschäumt werden müßten.

Polymethacrylimid-Schaumstoffe sind seit langem bekannt (siehe z. B. DE-C 27 26 260). Sie finden wegen ihrer hohen Wärmeformbeständigkeit, ihrer guten Druckfestigkeit und ihres geringen Gewichts eine breite Anwendung z. B. als Kernmaterial für Schichtwerkstoffe oder Schaumstoffverbundkörper (vgl. DE-C 28 22 885, DE-A 33 04 882, US-A 4 316 934).

Insbesondere im Zusammenhang mit der Herstellung von Sandwich-Bauteilen mit Deckschichten aus Kohlefaser/Bismaleinimid (CF/BMI)-Prepregs werden hohe Anforderungen an die mechanische Stabilität bei hohen Temperaturen gestellt. Typischerweise werden derartige Bauteile nach der Härtung im Autoklaven (mehrere h bei bis zu 200 °C) zusätzlich noch mehrere Stunden bei Temperaturen bis ca. 240 °C nachgetempert. Diese extremen Anforderungen können nur von Hartschaumstoffen erfüllt werden, die gute Wärmeformbeständigkeit und ein gutes Kriechverhalten aufweisen.

EP 532 023 A1 beschreibt Poly(meth)acrylimid-Schaumstoffe mit guter Wärmeformbeständigkeit und gleichmäßiger Zellstruktur, die durch Erhitzen von Polymeren aus a) 5 - 50 % tert.-Butyl(meth)acrylat und 50 - 95 % einer Mischung von b) Methacrylsäure und c) Methacrylnitril erhalten werden. Neben der aus Sicherheitsaspekten problematischen Abspaltung von Isobuten besitzen diese Schäume vor allem aber nicht die für die Herstellung von Verbundwerkstoffen geforderten hohen Wärmeformbeständigkeiten.

Ebenfalls nicht erreicht wird die benötigte hohe Wärmeformbeständigkeit von den Produkten der DE-PS 18 17 156, die durch Schäumen von Polymerisatplatten erhalten werden, welche aus a) einem Polymerisat aus mindestens 20 Gew.-% Acryl- oder Methacrylsäure und gegebenenfalls einem oder mehreren weiteren ungesättigten Monomeren, in der Regel Acryl- oder Methacrylnitril, und b) Formamid oder Monoalkylformamid bestehen. In der Beschreibung wird zwar erwähnt, daß sich durch Verwendung geringer Anteile von Verbindungen mit mindestens zwei reaktiven Gruppen im Molekül weitere Eigenschaftsverbesserungen erzielen lassen sollen, dies wird jedoch nicht durch Beispiele belegt.

Eine weitere Verbesserung der Materialeigenschaften und vor allem der Herstellbarkeit von Imidschäumen wird in der DE-PS 27 26 260 beschrieben. Durch Verwendung von 0,01 - 5 Gew.-% von Metallsalzen der Acryl- und/oder Methacrylsäure wird die Aufgabe gelöst, daß Schäume mit homogener Zellstruktur und hoher Dichte mit nicht reduzierten Treibmittelmengen auch noch bei hohen Schäumtemperaturen hergestellt werden können. Hohe Schäumtemperaturen sind für gute mechanische Festigkeit des Schaumes bei späteren Temperaturbelastungen während des Gebrauchs unerläßlich, bewirken jedoch bei unveränderter Treibmittelmenge zu starkes Aufschäumen und folglich eine zu geringe Dichte. Daher konnten thermisch belastbare Imidschäume zuvor nur durch starke Reduzierung der Treibmittelmenge unter dadurch bedingtem Verlust der Homogenität der Zellstruktur hergestellt werden.

Der überraschende Effekt der Metallsalze, daß in ihrer Gegenwart mit nicht herabgesetzten Treibmittelmengen auch bei hohen Schäumtemperaturen homogene Imidschäume mit hoher Dichte herstellbar sind, wird durch eine reversible ionische Vernetzung der (Meth)acrylsäureeinheiten mit den Metallionen erklärt. Die Salze behindern offensichtlich durch ihre verbrückende Wirkung zwischen den Molekülketten das Aufschäumen des Polymers und wirken so dem Treibmittel entgegen.

Bezüglich der Wärmeformbeständigkeit der Imidschäume in Abhängigkeit von der Verwendung der beschriebenen Metallsalze der Acryl- oder Methacrylsäure wird jedoch keine Lehre offenbart, durch die Diskussion der Beispiele und der Tabellen wird nur die Schaumdichte als Funktion der Schäumbedingungen und des Metallsalzgehaltes aufgezeigt. In einem Einzelfall wird durch Einsatz von Chrom-III-Dimethacrylat-hydroxid zwar ein Imidschaumstoff mit einer Wärmeformbeständigkeit von 246 °C und einer Druckfestigkeit von 5 N/mm erreicht, der Einsatz eines derart toxischen und ökologisch bedenklichen Metallsalzes ist jedoch nicht mehr zeitgemäß und es bedarf geeigneter Alternativen. Die kovalente, nicht reversible Vernetzung durch Verwendung von mehrfunktionellen vinylisch ungesättigten Verbindungen wird in dem Patent nicht erwähnt.

Aus DE-OS 35 19 005 A1 ist ein verbesserter Polymethacrylimid-Schaumstoff bekannt, der sich durch ein vorteilhaftes Kriechverhalten bei hoher Temperatur und durch geringe Veränderung des Kriechverhaltens bei Lagerung an feuchter Luft auszeichnet. Dies wird erreicht durch Erhitzen eines Kunststoffes, bestehend aus einem Mischpolymerisat aus 47 - 53 Gew.-% Methacrylnitril, 53 - 47 Gew.-% Methacrylsäure und 0,01 - 4 Gew.-% eines Metallsalzes der Acryl- und/oder Methacrylsäure sowie aus 0,5 - 4 Gew.-% eines Treibmittelgemisches aus Formamid oder Monomethylformamid und einem einwertigen aliphatischen Alkohol mit 3 - 8 Kohlenstoffatomen im Molekül, auf Temperaturen von 200 - 240 °C. Hierdurch wird sowohl die Veränderung des Kriechverhaltens an feuchter Luft als auch die Wasseraufnahme bei Lagerung in Wasser wesentlich verbessert. Die Verwendung von zusätzlichen Comonomeren wird als generell eine Verschlechterung der angestrebten Eigenschaften bewirkend beschrieben und daher nicht empfohlen.

Die noch nicht veröffentlichte deutsche Anmeldung mit dem Aktenzeichen 19606530.5 beschreibt Polymethacrylimid-Schaumstoffe mit verbessertem Flammschutz. Zum Erhalt hoher Werte für die sogenannte untere Grenzsauerstoffkonzentration, die in Form von LOI-Werten (Lowest Oxygen Index) angegeben wird, mußte zuvor eine hohe Konzentration herkömmlicher Flammschutzmittel zugegeben werden, was zwangsweise eine deutliche Verschlechterung der mechanischen Eigenschaften der flammgeschützten Schäume bewirkte. Gemäß der Lehre dieser Anmeldung kann der durch die hohe Flammschutzmittelkonzentration üblicherweise erkaufte Eigenschaftsverlust dadurch umgangen werden, daß der Reaktionsmischung zur Herstellung der schäumbaren Polymerisatplatte neben einer vergleichsweise geringen Menge eines herkömmlichen Flammschutzmittels zusätzlich ein Epoxidharz zugegeben wird. Aufgrund der in der Summe deutlich verringerten Konzentration der Zusätze können so bei nicht wesentlich verschlechterten Materialeigenschaften höhere LOI-Werte von mindestens 25 erreicht werden. Die Verwendung von Metallsalzzusätzen, Metallsalzen der Acryloder Methacrylsäure sowie von geringen Mengen an Vernetzern wird zwar beschrieben, die erfindungsgemäß erreichten Wärmeformbeständigkeiten von weniger als 210 °C sind jedoch für die Anforderungen der vorliegenden Anmeldung deutlich zu niedrig.

### Aufgabe und Lösung

Der Erfindung liegt die Aufgabe zugrunde, Polymethacrylimid-Schaumstoffe mit geringer Dichte und deutlich verbesserten thermomechanischen Eigenschaften bereitzustellen, deren Wärmeformbeständigkeit möglichst hoch, d.h. möglichst größer als 230 °C , vorzugsweise größer als 240 °C und ganz besonders bevorzugt größer als 250 °C sind, und die ein bisher nicht erreichtes Kriechverhalten nach 2 - 4 Stunden Temperaturbelastung von 180 - 200 °C unter gleichzeitiger Druckbelastung mit 0,2 - 0,7 MPa aufzeigen. Diese Eigenschaften sind unerläßlich, wenn die Schaumstoffe als Kernwerkstoffe für die Herstellung von Sandwichbauteilen mit Deckschichten aus Kohlefaser/Bismaleinimid geeignet sein sollen, d.h. unter den Bedingungen der Autoklavenhärtung, d.h. bei typischerweise 4 - 6 Stunden 180 - 200 °C und 5 - 7 MPa Autoklaveninnendruck und der üblichen Nachhärtung für typischerweise 6 - 16 Stunden bei 220 - 240 °C keine Schichtablösung zwischen Kern und Deckschicht des hergestellten Prepregs auftreten soll. Um diese Voraussetzung zu erfutten, muß das Kriechverhalten des Schaumstoffs, charakterisiert als Stauchung, die in einem Zeitstand-Druckversuch nach DIN 53 425 bei konstanter Temperatur erhalten wurde, besser als 3 % sein.

Die Aufgabe wird gelöst durch ein Verfahren zur Herstellung eines Polymethacrylimid-Schaumstoffs, bei dem zuerst eine Polymerisatplatte durch radikalische Polymerisation in Gegenwart von einem oder mehreren Initiatoren sowie ggf. weiteren üblichen Zusatzstoffen hergestellt wird, bestehend aus
(a) einer Monomermischung aus 40 - 60 Gew.-% Methacrylnitril, 60 - 40 Gew.-% Methacrylsäure und gegebenenfalls bis 20 Gew.-%, bezogen auf die Summe von Methacrylsäure und Methacrylnitril, weiteren monofunktionellen, vinylisch ungesättigten Monomeren
(b) 0,5 - 8 Gew.-% eines Treibmittelgemisches aus Formamid oder Monomethylformamid und einem einwertigen aliphatischen Alkohol mit 3 - 8 Kohlenstoffatomen im Molekül
(c) einem Vernetzersystem, welches besteht aus
   (c.1) 0,005 - 5 Gew.-% einer radikalisch polymerisierbaren vinylisch ungesättigten Verbindung mit mindestens 2 Doppelbindungen im Molekül und
   (c.2) 1 - 5 Gew.-% Magnesiumoxid gelöst in der Monomermischung
   und bei dem diese Platte anschließend bei Temperaturen von 200 bis 260 °C zur Polymethacrylimid-Platte aufgeschäumt und einer anschließenden Wärmebehandlung in zwei Schritten unterzogen wird, wobei der erste Schritt aus 2 - 6 Stunden bei 100 - 130 °C und der zweite Schritt aus 32 - 64 Stunden bei 180 - 220 °C besteht.

Durch das erfindungsgemäße Verfahren können Polymethacrylimid-Schaumstoffe mit deutlich verbesserten thermomechanischen Eigenschaften erhalten werden. Die nach diesem Verfahren hergestellten Polymethacrylimid-Schaumstoffe besitzen nicht nur eine höhere Wärmeformbeständigkeit als die bisher bekannten Produkte des Standes der Technik, sie zeigen vor allem ein deutlich besseres Stauchungsverhalten bei gleichzeitiger Einwirkung von Druck und Temperatur.

Dabei war es völlig unerwartet, daß die Kombination aus einem im Vergleich zum Stand der Technik deutlich erhöhtem Gehalt an Metallsalz der Methacrylsäure (Bei gleichem Gewichtsverhältnis von Magnesiumoxid und Magnesium-Methacrylat sind die entsprechenden Molverhältnisse ca. 5: 1) und einem zusätzlichen kovalenten Vernetzer auf Basis einer mehrfunktionellen vinylisch ungesättigten Verbindung überhaupt zu einem aufschäumbaren Polymerisat führt.

### Ausführung der Erfindung

Polymethacrylimid-Schaumstoffe zeichnen sich durch wiederkehrende Einheiten der Struktur 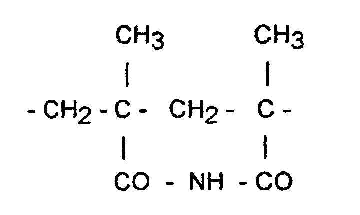 aus, die mehr als 50 Gew.-%, vorzugsweise 60 - 90 Gew.-% der Einheiten des Polymerisats ausmachen. Die Einheiten bilden sich beim Erhitzen auf 150 bis 250 °C aus benachbarten Einheiten der Methacryl- oder Acrylsäure und des Methacrylnitrils durch eine cyclisierende Isomerisierungsreaktion (vgl. DE-C 18 17 156, DE-C 27 26 259, EP-B 146 892). Üblicherweise wird zunächst ein Vorprodukt durch Polymerisation der Monomeren in Gegenwart eines Radikalinitiators bei niedrigen Temperaturen, z. B. 30 bis 60 °C mit Nacherhitzung auf 60 bis 120 °C erzeugt, das dann in einem zweiten Schritt durch Erhitzen auf ca. 200 bis 260 °C durch ein enthaltenes Treibmittel aufgeschäumt wird (siehe EP-B 356 714).

Die zur Herstellung der Schaumstoffe verwendeten Monomerengemische (a) enthalten Methacrylsäure und Methacrylnitril in einem Gewichtsverhältnis zwischen 40 : 60 und 60 : 40, vorzugsweise in einem Gewichtsverhältnis zwischen 47 : 53 und 53 : 47, und besonders bevorzugt in einem Gewichtsverhältnis zwischen 49 : 51 und 51 : 49 als Hauptbestandteile. Da die Umwandlung der polymerisierten Monomeren in Methacrylimidgruppen während des Erhitzens des Reaktionsansatzes und des Aufschäumens nicht immer vollständig abläuft, enthalten die Polymerisate häufig auch geringe Anteile der ursprünglich eingesetzten Monomereinheiten oder auch aus dem Nitril entstandene und nicht durch Cyclisierung in Imide umgewandelte Carbonsäureamidgruppen.

Weitere nicht imidartige Einheiten können von zusätzlich mitverwendeten weiteren monofunktionellen, vinylisch ungesättigten Monomeren stammen, deren polymerisierte Einheiten schwerer oder gar nicht in cyclische Imidgruppen überführbar sind. Als Comonomere können z. B. Acrylsäure, Ester der Acryl- oder Methacrylsäure, insbesondere mit niedrigen Alkoholen mit 1 4 C-Atomen, Styrol, Maleinsäure oder deren Anhydrid, Itakonsäure oder deren Anhydrid, Vinylpyrrolidon, Vinylchlorid oder Vinylidenchlorid verwendet werden. Der Anteil der Comonomeren kann 0 - 20 Gew.-%, vorzugsweise 0 - 10 Gew.-% und besonders bevorzugt 0 - 1 Gew.-%, bezogen auf die Summe von Methacrylsäure und Methacrylnitril, betragen.

Zum Aufschäumen des Vorprodukts während der Umwandlung in ein imidgruppenhaltiges Polymer dienen in bekannter Weise Treibmittelgemische (b), die bei 150 bis 250 °C durch Zersetzung oder Verdampfung eine Gasphase bilden. Treibmittel mit Amidstruktur, wie Harnstoff, Monomethyl- oder N,N'-Dimethylharnstoff, Formamid oder Monomethylformamid, setzen beim Zerfall Ammoniak oder Amine frei, die zur zusätzlichen Bildung von Imidgruppen beitragen können. Die erfindungsgemäß mitverwendeten stickstofffreien Treibmittel können bestehen aus: Ameisensäure, Wasser, oder einwertige aliphatische Alkohole mit 3 bis 8 Kohlenstoffatomen im Molekül wie Propanol, Butanol, Isobutanol, Pentanole oder Hexanol. Treibmittel werden im Reaktionsansatz üblicherweise in Mengen von ca. 0,5 bis 8 Gew.-% , bevorzugt 0,7 bis 6 Gew.-%, bezogen auf die eingesetzten Monomeren (a) verwendet.

Die Komponente (c.1 ) des Vernetzersystems (c) besteht aus einer radikalisch polymerisierbaren, vinylisch ungesättigten Verbindung mit mindestens 2 Doppelbindungen im Molekül.

Verallgemeinernd gesprochen können als kovalente Vernetzer (c.1) vinylisch ungesättigte Verbindungen mit mindestens zwei Allylgruppen oder mit mindestens zwei Methacryl- oder Acrylgruppen eingesetzt werden, in gleicher Weise sind auch Verbindungen vorteilhaft, die eine Kombination von Allyl- und (Meth)acrylgruppen enthalten und mindestens bifunktionell im Hinblick auf die Vernetzung sind.

Als derartige Monomere können z. B. Allylacrylat, Allylmethacrylat, Allylacrylamid, Allylmethacrylamid, Methylen-bis-acrylamid oder - methacrylamid, Diethylenbis(allylcarbonat), Ethylenglykoldiacrylat oder - dimethacrylat, Diethylenglykoldiacrylat oder -dimethacrylat, Triethylenglykoldiacrylat oder -dimethacrylat, Tetraethylenglykoldiacrylat oder -dimethacrylat,Tripropylenglykoldiacrylat oder -dimethacrylat, 1,3-Butandioldiacrylat oder -dimethacrylat, 1,4-Butandioldiacrylat oder - dimethacrylat,, Neopentyldioldiacrylat oder -dimethacrylat, Hexandiol-1,6-diacrylat oder -dimethacrylat, Trimethylolpropandiacrylat oder -dimethacrylat, Trimethylolpropantriacrylat oder -trimethacrylat, Pentaerythrittriacrylat oder -trimethacrylat, Pentaerythrittetraacrylat oder - tetramethacrylat, die Pentaerythritderivate jeweils ggf. auch als technisches Gemisch aus tri- und tetrafunktionellen Verbindungen, sowie Triallylcyanurat oder Triallylisocyanurat verwendet werden.

Besonders bevorzugt sind Allylmethacrylat und Triallylcyanurat.

Die jeweiligen Mengenanteile können z. B. 0,005 bis 5, bevorzugt 0,01 bis 3 und ganz besonders bevorzugt 0,05 bis 1 Gew.-%, bezogen auf die Summe von Methacrylsäure und Methacrylnitril, betragen.

Die zweite Komponente (c.2) des Vernetzersystems (c) besteht erfindungsgemäß aus Magnesiumoxid, welches in der Monomermischung gelöst wurde. Die zum Auflösen verwendete Monomermischung kann entweder alleine aus den unter (a) genannten Komponenten bestehen oder bereits die weiterhin zur Herstellung der Polymerisatplatte verwendeten Komponenten enthalten. Hierdurch entsteht unter Ausbildung einer homogenen Lösung Magnesiummethacrylat, bei eventueller Mitverwendung von Acrylsäure ein entsprechender Anteil Magnesiumacrylat. Es können aber auch als ionisch vernetzende Monomere mehrwertige Metallsalze der Methacrylsäure wie Magnesium-Methacrylat vorteilhaft verwendet werden, oder aber auch weitere Metallsalzzusätze gemäß DE-C 27 26 260, d.h. Methacrylate der Alkalioder Erdalkalimetalle oder des Zinks oder Zirkons oder des Bleis oder andere Verbindungen der genannten Metalle, sofern sie in dem Monomerenansatz löslich sind. Übliche Mengen liegen im Bereich von 0,01 bis 15, bevorzugt von 0,02 bis 12 und ganz besonders bevorzugt von 0,05 bis 10 Gew.-% der Metallsalz-(Meth)acrylate, beziehungsweise im Fall der Verwendung von Magnesiumoxid können die üblichen Mengen 0,01 bis 15, 1 bis 10, 1,1 bis 5, 1,2 bis 4 oder 1,5 bis 3 Gew.-% sein, jeweils bezogen auf die Summe von Methacrylsäure und Methacrylnitril. Besonders bevorzugt ist der Bereich von 1 - 5 Gew.-% Magnesiumoxid.

In Bezug auf das Verhältnis zwischen dem ionisch vernetzenden Methacrylatsalz (c.2) und dem kovalent vernetzenden mehrfunktionellen Monomer (c.1) hat es sich als vorteilhaft erwiesen, wenn bei einer Erhöhung des Anteils des Magnesiumsalzes der Anteil des kovalenten Vernetzers gleichzeitig erniedrigt wird. Dies kann soweit führen, daß bei sehr hohen Gewichtsanteilen des Magnesiumsalzes der Vernetzeranteil nahe Null sein kann. In gleicher Weise hat es sich gezeigt, daß es bei höheren Magnesiumsalz-Anteilen generell vorteilhafter sein kann, allylische Vernetzer an Stelle der methacrylischen Vemetzer einzusetzen. Diese Abhängigkeiten haben sich in den meisten Fällen als vorteilhaft erwiesen, sind jedoch nicht zwingend.

Als Polymerisationsinitiatoren werden die an sich für die Polymerisation von Methacrylaten üblichen verwandt, beispielsweise Azoverbindungen, wie Azodiisobutyronitril, sowie Peroxide, wie Dibenzoylperoxid oder Dilauroylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Bevorzugt werden die Polymerisationsinitiatoren in Mengen von 0,01 bis 0,3 Gew.-% bezogen auf die Ausgangsstoffe eingesetzt. Günstig kann es auch sein, Polymerisationsinitiatoren mit unterschiedlichen Zerfallseigenschaften bezüglich Zeit und Temperatur zu kombinieren. Gut geeignet ist z. B. die gleichzeitige Verwendung von tert-Butylperpivalat, tert-Butylperbenzoat und tert-Butylper-2-ethylhexanoat.

Die bei der Herstellung der Polymerisatplatte durch radikalische Polymerisation gegebenenfalls mitverwendeten üblichen Zusatzstoffe können beispielsweise Polymerisationsregler, elektrisch leitfähige Partikel oder Flammschutzmittel sein.

Als Polymerisationsregler können vorteilhafterweise Thioglycolsäure, 2-Mercaptoethanol, 2-Ethylhexylthioglycolat, Butylthioglycolat, Butylmercaptan, Dodecylmercaptan, tert.-Dodecylmercaptan oder Pentaerythrit-tetrathioglycolat in den bei der Polymerisation von Methacrylaten üblichen Mengen eingesetzt werden.

Der Zusatz von elektrisch leitfähigen Partikeln kann gemäß EP-B 356 714 erfolgen, um unerwünschten elektrostatischen Aufladungen vorzubeugen. Hier können Partikel aus Metallen, wie z.B. Aluminium, Nickel, Eisenlegierungen, Titan oder Zinn, oder auch Leitruß verwendet werden. Die eingesetzten Mengen können in Bereich von 0,1 bis 10 Gew.-% bezogen auf die eingesetzten Monomeren liegen, üblicherweise werden ca. 1 bis 5 Gew.-% verwendet.

Als übliche Flammschutzzusätze werden bekannte Halogen- oder Phosphorverbindungen verwendet. Bevorzugt sind organische Phosphorverbindungen gemäß der EP-B 146 892, vorzugsweise Dimethylmethanphosphonat (DMMP). Übliche Verwendungsmengen liegen im Bereich von ca. 5 - 15 Gew.-% bezogen auf die eingesetzten Monomeren. Beim Einsatz zunehmender Mengen von z. B. DMMP verschlechtern sich in der Regel die sonstigen thermischen und mechanischen Eigenschaften der Schaumstoffe.

Das Schäumen der im ersten Schritt des Verfahrens durch radikalische Polymerisation hergestellten Polymerisatplatten erfolgt durch Erhitzen auf 200 - 260 °C, bevorzugt auf 225 - 260 °C. Dieser Vorgang erfolgt vorteilhafterweise in einem Wärmeschrank, d. h. durch Übertragung der zum Schäumen benötigten Wärmemenge durch Luft. Die zum Schäumen erforderliche Energie kann gegebenenfalls aber auch durch andere Medien übertragen werden, z. B. durch Erhitzen in Kontakt mit Öl oder niedrigschmelzenden Metallen. Gleichfalls kann der Energieeintrag durch Einwirkung hochfrequenter elektromagnetischer Felder, z. B. Einwirkung von Mikrowellen, erfolgen. Die zum kompletten Schäumen erforderliche Zeit hängt natürlich stark vom Energieeintrag bzw. der Wärmekapazität des verwendeten Mediums ab und kann so von wenigen Minuten bis zu mehreren Stunden betragen. Die nach der Schäumung durchgeführte Wärmebehandlung wird vorteilhafterweise in den angegebenen Zeiten in einem Umluftwärmeschrank durchgeführt.

### BEISPIELE

### Beispiele 1 - 4

Die jeweils in der Tabelle genannten Gewichtsteile (T) Methacrylsäure, Methacrylnitril, Formamid, Propanol-2, Magnesiumoxid (MgO) und Allylmethacrylat bzw. Triallylcyanurat sowie 0,1 T tert-Butylperpivalat, 0,1 T tert-Butylperbenzoat und 0,034 T tert-Butylper-2-ethylhexanoat wurden gemischt.

Die Mischung wurde im Wasserbad für 72 h bei 38° C zwischen zwei Glasscheiben mit umlaufender Dichtschnur zu Platten der Größe 500 x 500 x 23 mm polymerisiert. Die Platten wurden anschließend im Umluft-Wärmeschrank für 3 h bei 115° C getempert. Die erhaltenen Polymerisatplatten wurden nach Entfernung der Glasplatten in einem Umluftwärmeschrank durch 2-stündiges Erhitzen auf ca. 230° C aufgeschäumt und in gleicher Weise anschließend 3 Stunden bei 115 °C und 48 Stunden bei 190 °C getempert.

Von den Schaumstoffplatten wurden die Dichte in kg/m³, die Druckfestigkeit gemäß DIN 53 421, die Wärmeformbeständigkeit gemäß DIN 53 424 (Punkt 3) und das Kriechverhalten gemäß DIN 53 425/ASTM D 621, berechnet als % Stauchung, bestimmt.

Die ermittelten Werte können der nachstehenden Tabelle entnommen werden.

| Beispiel Nr. | 1 | 2 | 3 | 4 |
|---|---|---|---|---|
| Methacrylsäure/Methacrylamid (Gewichtsteile)* | 50/50 | 50/50 | 50/50 | 50/50 |
| Formamid (Gewichtsteile) | 1,5 | 2,0 | 2,0 | 2,6 |
| Propanol-2 (Gewichtsteile) | 3,8 | 2,0 | 2,0 | 2,6 |
| Magnesiumoxid (Gewichtsteile) | 1,0 | 1,5 | 1,5 | 2,0 |
| Allylmethacrylat (Gewichtsteile) | 0,3 | 0 | 0 | 0 |
| Triallylcyanurat (Gewichtsteile) | 0 | 0 | 1,0 | 0 |
| Dichte [kg/m³] | 69 | 68 | 73 | 67 |
| Wärmeformbeständigkeit [°C] | 245 | 256 | 262 | 267 |
| Kriechverhalten [4h 200°C, 0,35 MPa] | 1,6 | 0 | 0,7 | 0,6 |

| | | | | |
|---|---|---|---|---|
| *Die Menge des Methacrylsäure/Methacrylamid-Gemisches wurde so gewählt, daß die Summe der Komponenten 100 Gew.-% ergibt | | | | |

### Beispiel 5

Polymethacrylimid-Schaumstoffe der erfindungsgemäßen Zusammensetzung des Beispiels 3 wurden mit und ohne zweistufige Temperung nach der Schäumung der Polymerisatplatte hergestellt und vermessen. Es wurden folgende Festigkeitswerte erzielt:

| Schaumdichte [kg/m³] | Prüfung bei 4 h 190 °C und | Stauchung in % | |
|---|---|---|---|
| | | ungetempert | getempert |
| 51 | 0,2 MPa | >12 nach 30 min | 0,33 |
| 71 | 0,6 MPa | >12 nach 21 min | 1,4 |
| 110 | 0,7 MPa | >12 nach 42 min | 1,5 |

Bei ungetemperten Proben wurde der Versuch nach Überschreiten von 12% Stauchung bei der angegebenen Zeit abgebrochen.

## Patentansprüche

1. Verfahren zur Herstellung von Polymethacrylimid-Schaumstoffen durch Herstellung eines Mischpolymerisats durch radikalische Polymerisation in Gegenwart von einem oder mehreren Initiatoren, sowie ggf. weiteren üblichen Zusatzstoffen, aus
(a) 40 - 60 Gew.-% Methacrylnitril,
60 - 40 Gew.-% Methacrylsäure und gegebenenfalls bis
20 Gew.-%, bezogen auf die Summe von Methacrylsäure und Methacrylnitril, weiteren monofunktionellen, vinylisch ungesättigten Monomeren
(b) 0,5 - 8 Gew.-% eines Treibmittelgemischs aus Formamid oder Monomethylformamid und einem einwertigen aliphatischen Alkohol mit 3 - 8 Kohlenstoffatomen im Molekül
(c) einem Vernetzersystem, welches besteht aus
(c.1 ) 0,005 - 5 Gew.-% einer radikalisch polymerisierbaren, vinylisch ungesättigten Verbindung mit mindestens 2 Doppelbindungen im Molekül und
(c.2) 1 - 5 Gew.-% Magnesiumoxid gelöst in der Monomermischung.
und anschließendes Schäumen dieser Polymerisatplatte bei Temperaturen von 200 bis 260 °C und anschließende Wärmebehandlung in zwei Schritten, wobei der erste Schritt aus 2 - 6 Stunden bei 100 - 130 °C und der zweite Schritt aus 32 - 64 Stunden bei 180 - 220 °C besteht.

2. Polymethacrylimid-Schaumstoff erhältlich nach einem Verfahren des Anspruchs 1

3. Polymethacrylimid-Schaumstoff mit einer Wärmeformbeständigkeit von größer als 250 °C, erhältlich nach dem Verfahren nach Anspruch 1.

4. Verwendung des Polymethacrylimid-Schaumstoffes nach Anspruch 2 oder 3 zur Herstellung von Sandwich-Bauteilen mit Deckschichten aus Kohlefaser/Bismaleinimid.

5. Polymethacrylimid-Schaumstoff, herstellbar nach Anspruch 1, **dadurch gekennzeichnet, daß** dieser eine maximale Stauchung von 3 % nach Temperaturbelastung von 200 °C für 4 Stunden und gleichzeitiger Druckbelastung von 0,2 - 0,7 MPa aufzeigt.

6. Polymethacrylimid-Schaumstoff, herstellbar nach Anspruch 1, **dadurch gekennzeichnet, daß** dieser eine maximale Stauchung von 2 % nach Temperaturbelastung von 200 °C für 4 Stunden und gleichzeitiger Druckbelastung von 0,2 - 0,7 MPa aufzeigt.

7. Prepreg mit einem Kern aus einem Polymethacrylimid-Schaumstoff, herstellbar nach Anspruch 1.

## Claims

1. Process for producing polymethacrylimide foams by preparing a copolymer by radical polymerisation in the presence of one or more initiators and optionally other conventional additives, from
(a) 40-60 wt% of methacrylonitrile,
60-40 wt% of methacrylic acid and optionally up to 20 wt%, based on the sum of methacrylic acid and methacrylonitrile, of other monofunctional, vinylically unsaturated monomers
(b) 0.5-8 wt% of a propellant mixture of formamide or monomethyl formamide and a monohydric aliphatic alcohol having 3-8 carbon atoms in the molecule
(c) a crosslinker system which consists of
(c.1) 0.005-5 wt% of a radically polymerisable, vinylically unsaturated compound having at least 2 double bonds in the molecule and
(c.2) 1-5 wt% of magnesium oxide dissolved in the monomer mixture
and subsequently foaming this polymer sheet at temperatures of 200-260°C and subsequent heat treatment in two steps, the first step consisting of 2-6 hours at 100-130°C and the second step consisting of 32-64 hours at 180-220°C.

2. Polymethacrylimide foam obtainable by a process according to claim 1.

3. Polymethacrylimide foam having a heat distortion temperature greater than 250°C, obtainable by the process according to claim 1.

4. Use of the polymethacrylimide foam according to claim 2 or 3 for preparing sandwich components with covering layers of carbon fibre/bismaleinimide.

5. Polymethacrylimide foam obtainable according to claim 1, **characterised in that** it exhibits a maximum compression of 3% after temperature loading at 200°C for 4 hours and simultaneous compressive loading of 0.2-0.7 MPa.

6. Polymethacrylimide foam obtainable according to claim 1, **characterised in that** it exhibits a maximum compression of 2% after temperature loading at 200°C for 4 hours and simultaneous compressive loading of 0.2-0.7 MPa.

7. Prepreg having a core of a polymethacrylimide foam obtainable according to claim 1.

## Revendications

1. Procédé de préparation de mousses de polyméthacrylimide par production d'un polymérisat mixte par polymérisation radicalaire en présence d'un ou plusieurs promoteurs ainsi qu'éventuellement d'autres additifs usuels, à base de :
a) 40 - 60 % en poids de nitrile méthacrylique
60 - 40 % en poids d'acide méthacrylique et le cas échéant jusqu'à 20 % en poids rapporté à la somme de l'acide méthacrylique et du nitrile méthacrylique, d'autres monomères monofonctionnels, non saturés vinyliquement
b) de 0,5 à 8 % en poids d'un mélange moussant à base de formamide ou de monométhylformamide et d'un alcool aliphatique monofonctionnel ayant de 3 à 8 atomes de carbone dans la molécule,
c) un système d'agent réticulant qui consiste en
(c.1) 0,005 - 5 % en poids d'un composé polymérisable par voie radicalaire, non saturé vinyliquement ayant au moins deux double liaisons dans la molécule et
(c.2) 1 à 5 % en poids d'oxyde de magnésium dissout dans le mélange monomère,
et ensuite par mise en mousse de ce panneau de polymérisation à des températures allant de 200 à 260°C et traitement thermique consécutif en deux étapes, pour lequel la première étape constitue en 2 à 6 heures à 100 - 130°C, et la deuxième étape consiste en 32 à 64 heures à 180 - 220°C.

2. Mousse en polyméthacrylimide accessible selon un procédé de la revendication 1.

3. Mousse de polyméthacrylimide ayant une stabilité de forme à la chaleur supérieure à 250°C, accessible conformément au procédé selon la revendication 1.

4. Utilisation de la mousse de polyméthacrylimide selon la revendication 2 ou la revendication 3, en vue de la production d'éléments de construction en sandwich avec des couches de couverture en fibres de carbone / bismaleinimide.

5. Mousse de polyméthacrylimide, que l'on peut produire selon la revendication 1,
**caractérisée en ce que**
celle-ci présente une compression maximale de 3 % après contrainte thermique de 200°C pendant 4 heures et contrainte simultanée par pression de 0,2 - 0,7 MPa.

6. Mousses de polyméthacrylimide, que l'on peut produire selon la revendication 1,
**caractérisée en ce que**
celle-ci présente une déformation par pression maximale de 2 % après contrainte thermique de 200°C pendant 4 heures et contrainte sous pression simultanément de 0,2 - 0,7 MPa.

7. Préimprégné avec un noyau à base de mousse de polyméthacrylimide, qu'on peut produire selon la revendication 1.
